# DEMANDE DE BREVET EUROPEEN

(11) **EP 1 145 741 A1**
(43) Date de publication de la demande: **17.10.2001**
(21) Numéro de dépôt: 01400891.6
(22) Date de dépôt: 06.04.2001
(51) Int. Cl.: A63B 9/00, F16B 7/04

(54) **Ensemble de jeux essentiellement destiné à des collectivités**

(30) Priorité: 10.04.2000 FR 0004551
(71) Demandeur: Rogez, Patrice, 49100 Angers (FR)
(72) Inventeur: Rogez, Patrice, 49100 Angers (FR)
(74) Mandataire: Cabinet HERRBURGER

(57) **Abrégé**

Ensemble de jeux essentiellement destiné à des collectivités comportant une ossature constituée par des portiques tubulaires (1) essentiellement verticaux, de préférence en forme de U renversés sur lesquels sont fixés au moyen d'éléments de liaison (10, 10') des traverses (2) et/ou des tubes (3) permettant le montage de différents accessoires tels plates-formes horizontales (4), balustrades ou panneaux verticaux (5), caractérisé en ce que les éléments de liaison sont constitués par des embouts (10, 10') essentiellement en forme de T comportant d'une part une branche courbe (11, 11') par laquelle ils sont fixés aux portiques tubulaires (1) au moyen de rivets (13), et d'autre part une branche rectiligne (12, 12') qui fait saillie à la partie médiane de la branche courbe (11, 11') pour permettre la fixation des traverses (2) et/ou des tubes (3) permettant le montage des accessoires (4, 5) au moyen de boulons.

## Description

La présente invention concerne un ensemble de jeux essentiellement destiné à des collectivités.

Les responsables de l'aménagement des parcs de loisir, squares, ou résidences accueillant de nombreux enfants ont pris l'habitude de leur réserver des espaces dans lesquels ils peuvent se livrer à diverses activités ludiques.

Ces espaces sont fréquemment équipés d'ensembles de jeux constitués par des portiques sur lesquels sont montés différents accessoires tels que plates-formes, toboggans, échelles, passerelles suspendues, murs d'escalade, tunnels à ramper, balançoires...

Ces ensembles de jeux doivent satisfaire à une réglementation et un cahier des charges très stricts et en particulier garantir la sécurité des enfants dont les comportements à risque ne sont plus à prouver. Pour des raisons économiques évidentes ils doivent parallèlement présenter une bonne robustesse et résister autant que possible au vandalisme.

Il est en outre souhaitable que de tels ensembles de jeux puissent être montés et démontés très rapidement et de façon sûre ce même dans l'urgence, par un personnel peu qualifié.

Or, les différents accessoires des ensembles de jeux classiques sont en règle générale fixés aux portiques au moyen d'étriers moulés en fonte d'aluminium constitués de deux mâchoires assemblées par boulonnage ; il s'agit là d'une opération, devant obligatoirement être réalisée in situ et pouvant en outre entraîner des erreurs de montage préjudiciables à la sécurité des utilisateurs. De plus le « saccage » de cet unique boulon met en péril l'intégrité de la structure dans son ensemble.

Il n'existe actuellement pas sur le marché d'ensemble de jeu pouvant satisfaire aux différents impératifs susmentionnés et donc de nature à donner entière satisfaction.

La présente invention a pour objet de combler cette lacune en proposant un ensemble de jeux à la fois sûr et résistant et pouvant parallèlement être monté ou démonté très rapidement même par un personnel peu qualifié.

Cet ensemble de jeux comporte une ossature constituée par des portiques tubulaires essentiellement verticaux, de préférence en forme de U renversés sur lesquels sont fixés, au moyen d'éléments de liaison, des traverses et/ou des tubes permettant le montage de différents accessoires tels que plates-formes horizontales, balustrades ou panneaux verticaux.

Ces accessoires font en règle générale eux-mêmes office de supports pour des accessoires autres tels que toboggans, échelles suspendues, tunnels à ramper...

Selon l'invention, cet ensemble de jeux est caractérisé en ce que les éléments de liaison sont constitués par des embouts essentiellement en forme de T comportant d'une part une branche courbe par laquelle ils sont fixés aux portiques tubulaires au moyen de rivets, et d'autre part une branche rectiligne qui fait saillie à la partie médiane de la branche courbe pour permettre la fixation des traverses et/ou des tubes permettant le montage des accessoires au moyen de boulons.

Il est essentiel conformément à l'invention que la concavité de la branche courbe des embouts en forme de T soit dirigée vers l'extérieur à l'opposé de la branche rectiligne, et que le profil de cette branche courbe corresponde exactement à la périphérie des portiques tubulaires afin de lui permettre de s'appliquer intimement contre la face externe de ces portiques.

La longueur des branches courbes est en outre avantageusement choisie de manière à pouvoir répartir quatre embouts en forme de T sur la circonférence des portiques tubulaires, les branches rectilignes de ces quatre embouts étant respectivement décalées d'un angle de 90°.

Il est à noter qu'il est en règle générale prévu deux types d'embouts en forme de T ne se distinguant que par leurs dimensions : les embouts d'un premier type sont destinés à la fixation des tubes de montage tandis que les embouts du second type sont destinés à la fixation des traverses de montage.

Selon l'invention, les portiques tubulaires ainsi que les embouts en forme de T et les tubes et les traverses de montage sont constitués par des éléments métalliques de préférence en acier inoxydable.

Selon une caractéristique particulièrement avantageuse de l'invention les embouts en forme de T, sont fixés en usine sur les portiques tubulaires au moyen de rivets eux aussi de préférence en acier inoxydable.

Les portiques tubulaires et les embouts fixés sur ceux-ci constituent ainsi un ensemble indémontable, donc résistant au vandalisme ; de plus grâce à l'utilisation d'un même matériau et à la présence de surfaces de contact de grande dimension les rivets ne peuvent pas prendre de jeu, ce qui contribue dans une large mesure la robustesse de l'ensemble.

Compte tenu de ce qui précède, seuls doivent être montés à l'extérieur les traverses et les tubes de montage ainsi que leurs accessoires, ce au moyen de boulons pouvant être cachés par des caches boulons inviolables pour résister au vandalisme. Cette opération peut être effectuée très rapidement au moyen d'un outillage minimum (deux types de clés seulement), ce qui permet de réduire notablement les coûts de montage et de démontage, ainsi que de maintenance et donc de réaliser des économies appréciables tant en temps qu'en main d'oeuvre.

Selon une autre caractéristique de l'invention, les tubes de montage sont constitués par des éléments aplatis à leurs extrémités et équipés à ce niveau de cavités oblongues ouvertes vers l'extérieur adaptées à la réception des branches rectilignes des embouts en forme de T.

Les extrémités aplaties des tubes de montage comportent au moins un perçage traversant coopérant avec au moins un perçage similaire prévu sur la branche rectiligne des embouts en forme de T pour permettre la fixation de ces éléments au moyen de boulons.

Selon l'invention, les tubes de montage peuvent avantageusement comporter au moins une découpe longitudinale de préférence réalisée au laser et permettant la réception de balustrades ou de panneaux verticaux ayant une section correspondante.

Selon une autre caractéristique de l'invention, les traverses de montage sont constituées par des profilés comportant d'une part une première branche par laquelle ils sont fixés aux embouts en forme de T et donc aux portiques tubulaires et d'autre part une seconde branche essentiellement perpendiculaire à la première branche et définissant une surface d'appui pour des plates-formes horizontales de préférence réalisées en un matériau antidérapant à bords arrondis.

Les profilés de montage s'appliquent contre l'une des faces latérales des branches rectilignes des embouts en forme de T par la face interne de leur première branche au niveau des extrémités de celle-ci.

Les surfaces se trouvant ainsi en regard des profilés de montage d'une part et des embouts en forme de T d'autre part sont équipées de perçages similaires de façon à permettre la fixation de ces éléments au moyen de boulons.

Selon l'invention, la seconde branche des profilés de montage est quant à elle munie d'une série d'orifices de réception d'organes de fixation des plates-formes horizontales.

Les profilés de montage peuvent par ailleurs avantageusement être équipés d'une branche auxiliaire coudée essentiellement en forme de U ayant pour fonction de maintenir l'extrémité inférieure des branches rectilignes des embouts en forme de T, et d'empêcher le soulèvement des traverses de montage et des plates-formes en cas de dégradation des fixations boulonnées.

Il est en effet essentiel conformément à l'invention que les traverses et les tubes de montage soient dimensionnés de telle sorte qu'ils ne puissent pas s'extraire des embouts après y avoir été emmanchés, ce même en cas de dégradation ou de « saccage » des fixations boulonnées. L'intégrité de la structure ne peut ainsi pas être mise en péril immédiat ce qui conduit à l'obtention d'une sécurité « à double effet ».

Les caractéristiques de l'ensemble de jeux qui fait l'objet de l'invention seront décrites plus en détail à l'aide des dessins non limitatifs annexés dans lesquels :
- la figure 1 est une vue en perspective d'un ensemble de jeux conforme à l'invention,
- la figure 2 est une vue de détail d'un tel ensemble de jeux,
- la figure 3 est une vue schématique éclatée représentant les éléments de liaison.

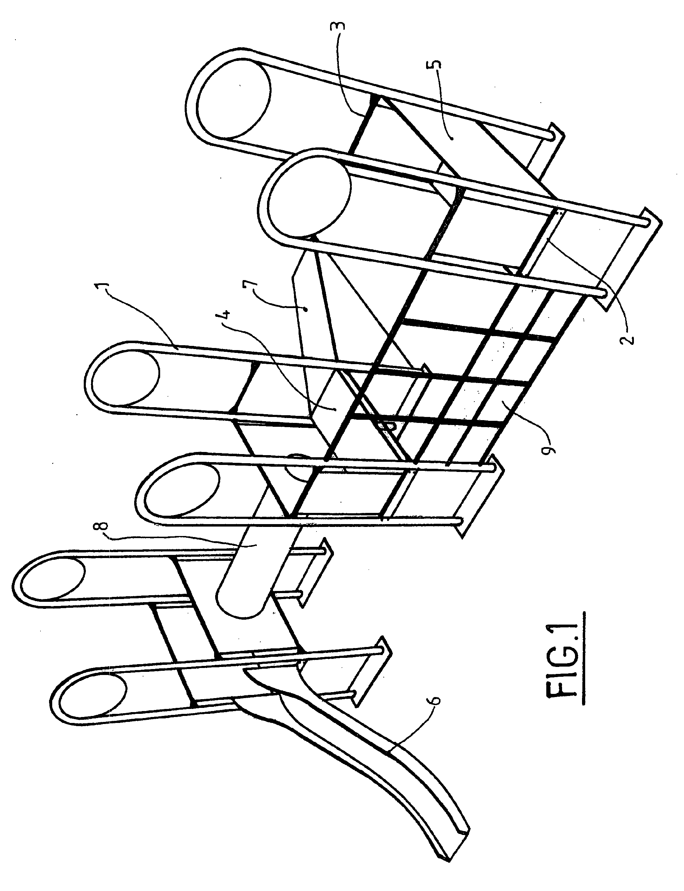

Selon la figure 1, l'ensemble de jeux comporte une ossature constituée par des portiques tubulaires verticaux 1 en forme de U renversé réalisés en acier inoxydable et sur lesquels sont fixés des traverses 2 et des tubes 3 réalisés eux aussi en acier inoxydable et permettant le montage de plates-formes horizontales 4 ainsi que de balustrades ou de panneaux verticaux 5.

Ces différents éléments coopèrent avec des accessoires autres tels que dans l'exemple représenté sur la figure 1 un toboggan 6, un plan incliné 7, un tunnel à ramper 8 et une échelle 9.

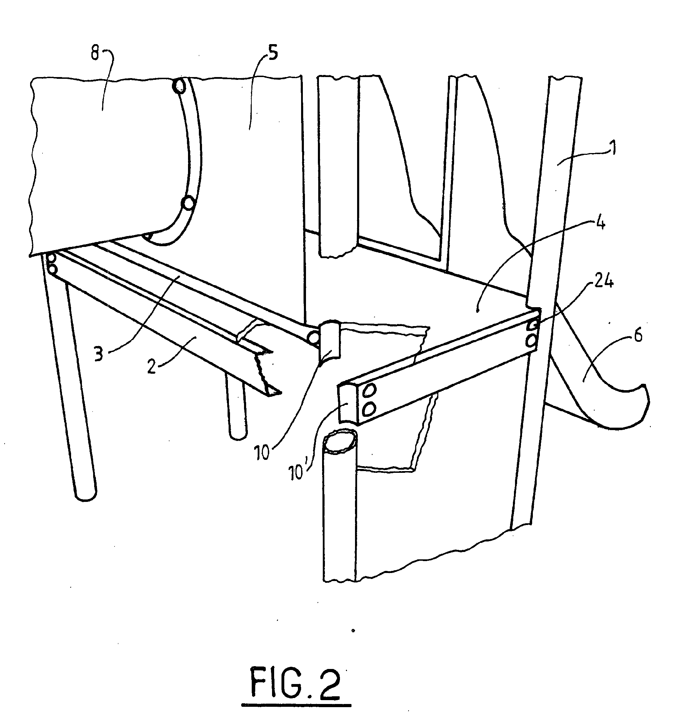

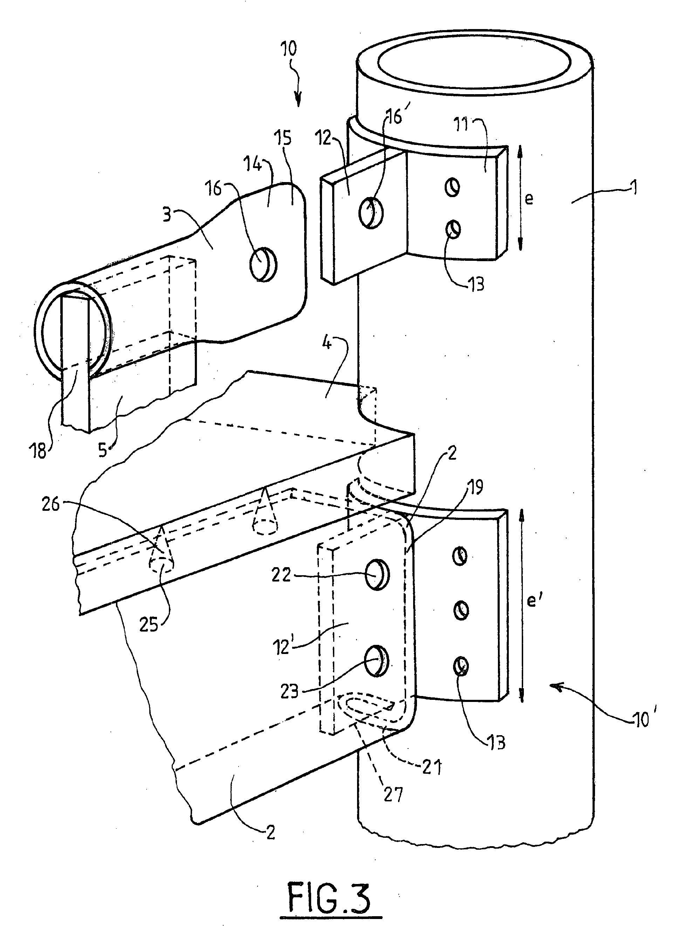

Selon la figure 2, les traverses 2 sont adaptées au montage de plates-formes horizontales 4 tandis que les tubes 3 sont adaptés au montage de balustrades ou de panneaux verticaux 5 ce au moyen d'éléments de liaison en acier inoxydable 10, 10' représentés plus en détail sur la figure 3.

Selon la figure 3, les éléments de liaison 10, 10' sont constitués par des embouts en forme de T comportant une branche courbe 11, 11' ainsi qu'une branche rectiligne 12, 12' qui fait saillie à la partie médiane de la branche courbe 11, 11'.

L'ensemble de jeux comporte en fait deux types d'embouts en forme de T dont le premier 10 permet la fixation des tubes de montage 3 tandis que le second 10' permet la fixation des traverses de montage 2.

Ces deux types d'embouts ne se distinguent que par leur longueur e, e'.

Les branches courbes 11, 11' des embouts en forme de T 10, 10' ont un profil correspondant à la périphérie des portiques tubulaires 1 et peuvent ainsi s'appliquer intimement contre ces portiques et y être fixées au moyen de rivets 13 en acier inoxydable. Cette fixation des embouts en forme de T 10, 10' sur les portiques 1 est réalisée en usine.

Pour permettre cette fixation, les branches courbes 11, 11' des embouts en forme de T 10, 10' ainsi que les portiques tubulaires 1 sont équipés de perçages adaptés.

Par ailleurs, et selon la figure 3, les tubes de montage 3 sont aplatis à leurs extrémités 14 et équipés à ce niveau de cavités oblongues 15 ouvertes vers l'extérieur et adaptées à la réception des branches rectilignes 12 des embouts en forme de T 10.

Les extrémités aplaties 14 des tubes de montage 3 comportent en outre un perçage traversant 16 coopérant avec un perçage similaire 16' des branches rectilignes 12 des embouts 10 de façon à permettre la fixation de ces différents éléments au moyen de boulons non représentés sur les figures qui sont cachés par des caches boulons inviolables 17 (figure 2).

Les tubes de montage 3 comportent par ailleurs des découpes longitudinales 18 réalisées au laser et permettant la mise en place et le maintien des balustrades ou panneaux verticaux 5. Les dimensions de ces découpes 18 sont bien entendu adaptées à l'épaisseur de ces panneaux ou balustrades.

Selon la figure 3, les traverses de montage 2 sont quant à elles constituées par des profilés en acier inoxydable comportant une première branche 19, une seconde branche 20 perpendiculaire à cette première branche, ainsi qu'une branche auxiliaire 21 coudée en forme de U qui s'étend parallèlement à la seconde branche 20 d'un même côté de la première branche 19.

La première branche 19 des profilés de montage 2 s'applique par sa face interne contre l'une des faces latérales des branches rectilignes 12' des embouts en forme de T 10 et est équipée, à chacune de ses extrémités de deux perçages 22 situés l'un au-dessous de l'autre ; ces perçages 22 coopèrent avec des perçages correspondants 23 percés dans la branche rectiligne 12' des embouts en forme de T 10' de façon à permettre la fixation des profilés de montage 2 sur les portiques 1 au moyen de boulons non représentés qui sont cachés par des caches boulons inviolables 24 (figure 2).

Selon la figure 3, la seconde branche 20 des profilés de montage 2 s'étend horizontalement et constitue une surface d'appui pour les plates-formes 4. Pour permettre la fixation de ces plates-formes, cette seconde branche 20 est en outre équipée d'une série d'orifices de réception 25 d'organes de fixation 26.

Par ailleurs, la branche auxiliaire 21 des profilés de montage 2 permet le maintien de l'extrémité inférieure 27 des branches rectilignes 12' des embouts en forme de T 10'.

## Revendications

1. Ensemble de jeux essentiellement destiné à des collectivités comportant une ossature constituée par des portiques tubulaires (1) essentiellement verticaux, de préférence en forme de U renversés sur lesquels sont fixés au moyen d'éléments de liaison (10, 10') des traverses (2) et/ou des tubes (3) permettant le montage de différents accessoires tels plates-formes horizontales (4), balustrades ou panneaux verticaux (5),
**caractérisé en ce que**
les éléments de liaison sont constitués par des embouts (10, 10') essentiellement en forme de T comportant d'une part une branche courbe (11, 11') par laquelle ils sont fixés aux portiques tubulaires (1) au moyen de rivets (13), et d'autre part une branche rectiligne (12, 12') qui fait saillie à la partie médiane de la branche courbe (11, 11') pour permettre la fixation des traverses (2) et/ou des tubes (3) permettant le montage des accessoires (4, 5) au moyen de boulons.

2. Ensemble de jeux selon la revendication 1,
**caractérisé en ce que**
les portiques tubulaires (1) sont constitués par des éléments métalliques de préférence en acier inoxydable sur lesquels les embouts en forme de T (10, 10'), également métalliques sont fixés en usine au moyen de rivets (13) eux aussi réalisés de préférence en acier inoxydable.

3. Ensemble de jeux selon l'une quelconque des revendications 1 et 2,
**caractérisé en ce que**
les boulons sont cachés par des caches boulons inviolables (17, 24).

4. Ensemble de jeux selon l'une quelconque des revendications 1 à 3,
**caractérisé en ce que**
les tubes de montage (3) sont constitués par des éléments métalliques de préférence en acier inoxydable aplatis à leurs extrémités (14) et équipés à ce niveau de cavités oblongues (15) ouvertes vers l'extérieur adaptées à la réception des branches rectilignes (12) des embouts en forme de T (10).

5. Ensemble de jeux selon la revendication 4,
**caractérisé en ce que**
les extrémités aplaties (14) des tubes de montage (3) comportent au moins un perçage traversant (16) coopérant avec au moins un perçage similaire (16') prévu sur la branche rectiligne (12) des embouts en forme de T (10) pour permettre la fixation de ces éléments au moyen de boulons.

6. Ensemble de jeux selon l'une quelconque des revendications 4 et 5,
**caractérisé en ce que**
les tubes de montage (3) comportent au moins une découpe longitudinale (18) de préférence réalisée au laser et permettant la réception de balustrades ou de panneaux verticaux (5) ayant une section correspondante.

7. Ensemble de jeux selon l'une quelconque des revendications 1 à 6,
**caractérisé en ce que**
les traverses de montage (2) sont constituées par des profilés métalliques de préférence en acier inoxydable comportant d'une part une première branche (19) par laquelle ils sont fixés aux embouts en forme de T (10') et donc aux portiques tubulaires (1) et d'autre part une seconde branche (20) essentiellement perpendiculaire à la première branche (19) et définissant une surface d'appui pour des plates-formes horizontales (4).

8. Ensemble de jeux selon la revendication 7,
**caractérisé en ce que**
les traverses de montage (2) s'appliquent contre l'une des faces latérales des branches rectilignes (12') des embouts en forme de T (10') par la face interne de leur première branche (19), les surfaces se trouvant ainsi en regard des traverses de montage (2) d'une part et des embouts en forme de T (10') d'autre part étant équipées de perçages similaires (22, 23) de façon à permettre la fixation de ces éléments au moyen de boulons.

9. Ensemble de jeux selon l'une quelconque des revendications 7 et 8,
**caractérisé en ce que**
la seconde branche (20) des traverses de montage (2) est munie d'une série d'orifices de réception (25) d'organes de fixation (26) des plates-formes horizontales (4).

10. Ensemble de jeux selon l'une quelconque des revendication 5 à 9,
**caractérisé en ce que**
les traverses de montage (2) sont équipées d'une branche auxiliaire (21), coudée essentiellement en forme de U ayant pour fonction de maintenir l'extrémité inférieure (27) des branches rectilignes (12') des embouts en forme de T (10'), et d'empêcher le soulèvement des traverses de montage (2) et des plates-formes (4) en cas de dégradation des fixations boulonnées.
